(19) Europäisches Patentamt
European Patent Office
Office européen des brevets

(11) EP 1 274 575 B1

(12) **EUROPÄISCHE PATENTSCHRIFT**

(45) Veröffentlichungstag und Bekanntmachung des Hinweises auf die Patenterteilung:
**06.05.2004 Patentblatt 2004/19**

(21) Anmeldenummer: **01900409.2**

(22) Anmeldetag: **10.01.2001**

(51) Int Cl.[7]: **B32B 27/36**, C08L 67/02, C08K 5/5317, B29C 55/12

(86) Internationale Anmeldenummer:
**PCT/EP2001/000212**

(87) Internationale Veröffentlichungsnummer:
**WO 2001/053090 (26.07.2001 Gazette 2001/30)**

(54) **MATTE, FLAMMHEMMEND AUSGERÜSTETE KOEXTRUDIERTE POLYESTERFOLIE, VERFAHREN ZU IHRER HERSTELLUNG UND IHRE VERWENDUNG**

MATT, FLAME-RETARDANT, CO-EXTRUDED POLYESTER FILM, A METHOD FOR THE PRODUCTION THEREOF AND THE USE OF THE SAME

FEUILLE POLYESTER MATTE, IGNIFUGEANTE, COEXTRUDEE, SON PROCEDE DE REALISATION ET SON UTILISATION

(84) Benannte Vertragsstaaten:
**DE FR GB IT LU NL**

(30) Priorität: **20.01.2000 DE 10002161**

(43) Veröffentlichungstag der Anmeldung:
**15.01.2003 Patentblatt 2003/03**

(73) Patentinhaber: **Mitsubishi Polyester Film GmbH
65203 Wiesbaden (DE)**

(72) Erfinder:
- **MURSCHALL, Ursula
55283 Nierstein (DE)**
- **KERN, Ulrich
55218 Ingelheim (DE)**
- **CRASS, Günther
65232 Taunusstein (DE)**
- **HILKERT, Gottfried
55291 Saulheim (DE)**

(74) Vertreter: **Schweitzer, Klaus, Dr. et al
Patentanwaltskanzlei Zounek,
Industriepark Kalle-Albert,
Gebäude H391
Rheingaustrasse 190-196
65174 Wiesbaden (DE)**

(56) Entgegenhaltungen:
**EP-A- 0 144 878**
**EP-A- 0 245 207**
**EP-A- 0 976 548**
**US-A- 5 073 435**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist. (Art. 99(1) Europäisches Patentübereinkommen).

EP 1 274 575 B1

Printed by Jouve, 75001 PARIS (FR)

## Beschreibung

Die Erfindung betrifft eine biaxial orientierte Polyesterfolie mit einer Basisschicht, die zu mindestens 70 Gew.-% aus einem thermoplastischen Polyester besteht, die mindestens ein Flammschutzmittel enthält und mindestens einer matten Deckschicht, welche eine Mischung bzw. ein Blend aus zwei Komponenten I und II enthält. Die Erfindung betrifft weiterhin ein Verfahren zur Herstellung der Folie und ihre Verwendung.

Die Komponente I der Mischung bzw. des Blends ist ein Polyethylenterephthalat-Homopolymer oder Polyethylenterephthalat-Copolymer oder eine Mischung aus Polyethylenterephthalat Homo- oder Copolymeren.

Die Komponente II der Mischung bzw. des Blends ist ein Polyethylenterephthalat-Copolymer, welches aus dem Kondensationsprodukt der folgenden Monomeren bzw. deren zur Bildung von Polyestern befähigten Derivaten besteht: Isophthalsäure, aliphatische Dicarbonsäure, Sulfomonomeres, die eine Metallsulfonatgruppe an dem aromatischen Teil einer aromatischen Dicarbonsäure enthält und aliphatisches oder cycloaliphatisches Glykol.

Die erfindungsgemäße Deckschicht zeichnet sich durch eine charakteristische matte Oberfläche bzw. Optik aus und ist für die Verwendung im Messebau oder als Verpackungsfolie oder für Anwendungen im industriellen Sektor gut geeignet, wo insbesondere eine Schwerentflammbarkeit nach DIN 4102 gefordert wird.

Die Industrie hat einen hohen Bedarf an transparenten, hochglänzenden Kunststoffolien, wie z.B. biaxial orientierte Polypropylen- oder biaxial orientierte Polyesterfolien. Daneben besteht in zunehmendem Maße ein Bedarf an solchen transparenten Folien, die schwerentflammbar sind und bei denen zumindest eine Oberflächenschicht nicht hochglänzend ist sondern sich durch ein charakteristisches mattes Erscheinungsbild auszeichnet und dadurch z.B. im Messebau werbewirksam sind oder der Verpackung ein besonderes attraktives und damit werbewirksames Aussehen verleiht.

In der **US-A 4,399,179** wird eine koextrudierte biaxial orientierte Polyesterfolie beschrieben, die aus einer transparenten Basisschicht und mindestens einer matten Schicht besteht, welche im wesentliche aus einem bestimmten Polyethylenterephthalat-Copolymer besteht und zudem inerte Partikel mit einem Durchmesser von 0,3 bis 20 μm in einer Konzentration von 3 bis 40 % enthält. Das spezielle Copolymer ist eine Verarbeitungshilfe, durch die die Viskosität der die inerten Partikel enthaltenden Schmelze herabgesetzt wird, so dass eine einwandfreie Extrusion dieser Schicht möglich ist. Die Mattheit der Folie wird durch Zugabe der inerten Partikel in die entsprechende Schicht erreicht.

In der **EP-A 0144 878** wird eine selbstragende orientierte Folie aus thermoplastischem Kunststoff beschrieben, welche auf wenigstens einer ihrer beiden Oberflächen eine durchgehende Polyesterbeschichtung trägt, die als wäßrige Dispersion auf die Folie vor dem letzten Streckschritt aufgebracht wird. Die Polyesterbeschichtung besteht aus einem Kondensationsprodukt von verschiedenen Monomeren, die zur Bildung von Polyestem befähigt sind, wie Isophthalsäure, aliphatische Dicarbonsäuren, Sulfomonomere und aliphatische oder cycloaliphatische Glykole.

In der **DE-A 2346 787** ist ein schwerentflammbarer Rohstoff beschrieben. Neben dem Rohstoff ist auch die Verwendung des Rohstoffs zur Herstellung transparenter Folien und Fasem beschrieben. Bei der Herstellung von Folien aus dem dort beschriebenen phospholanmodifizierten Rohstoff zeigten sich jedoch folgende Defizite:

Der Rohstoff ist sehr hydrolyseempfindlich und muß dementsprechend sehr gut vorgetrocknet werden. Beim Trocknen des Rohstoffes mit handelsüblichen Trocknern verklebt der Rohstoff jedoch, so dass nur unter schwierigsten Bedingungen eine Folie herstellbar ist. Die unter extremen, unwirtschaftlichen Bedingungen hergestellten Folien verspröden bei Temperaturbelastung, d. h. die mechanischen Eigenschaften verschlechtern sich dramatisch, so dass die Folie unbrauchbar ist. Bereits nach 48 Stunden Temperaturbelastung tritt diese Versprödung auf.

Im Stand der Technik finden sich keine Hinweise darauf, wie einer Folie zumindest auf einer Folienoberfläche ein niedriger Glanz bei einer weiterhin hohen Transparenz der Folie verliehen werden kann, wobei gleichzeitig die Folie nach DIN 4102 schwerentflammbar ist und keine Versprödung nach Temperaturbelastung aufweist.

Aufgabe der vorliegenden Erfindung war es deshalb, eine transparente Polyesterfolie mit mindestens einer matten Oberfläche zur Verfügung zu stellen, die nach DIN 4102 schwerentflammbar ist, die sich einfach und wirtschaftlich herstellen läßt, die die guten physikalischen Eigenschaften der bekannten Folien besitzt, keine Entsorgungsprobleme verursacht und keine Versprödung nach Temperaturbelastung aufweist.

Gelöst wird die Aufgabe durch eine koextrudierte, biaxial orientierte Polyesterfolie, deren kennzeichnende Merkmale darin bestehen, dass sie ein im Polyester lösliches Flammschutzmittel enthält, welches bei der Folienherstellung mittels Masterbatch-Technologie zudosiert wird und eine matte Deckschicht aufweist, die eine Mischung bzw. ein Blend aus zwei Komponenten I und II enthält.

Eine flammhemmende Wirkung bedeutet, dass die Folie in einer sogenannten Brandschutzprüfung die Bedingungen nach DIN 4102 Teil 2 und insbesondere die Bedingungen nach DIN 4102 Teil 1 erfüllt und in die Baustoffklasse B 2 und insbesondere B1 der schwer entflammbaren Stoffe eingeordnet werden kann.

Desweiteren soll die Folie den UL-Test 94 "Vertical Burning Test for Flammability of Plastic Material" bestehen, so dass sie in die Klasse 94 VTM-0 eingestuft werden kann. Das bedeutet, dass die Folie 10 Sekunden nach Wegnahme des Bunsenbrenners nicht mehr brennt, nach 30 Sekunden kein Glühen beobachtet wird und auch kein Abtropfen festgestellt wird.

Die Komponente I der Mischung bzw. des Blends ist ein Polyethylenterephthalat-Homopolymer oder Polyethylenterephthalat Copolymer oder eine Mischung aus Polyethylenterephthalat Homo- oder Copolymeren.

Die Komponente II der Mischung bzw. des Blends ist ein Kondensationsprodukt der folgenden Monomeren bzw. deren zur Bildung von Polymeren befähigten Derivaten:

A) 65 bis 95 Mol-% Isophthalsäure;
B) 0 bis 30 Mol-% wenigstens einer aliphatische Dicarbonsäure der Formel

$$HOOC\text{-}(CH_2)_n\text{-}COOH$$

wobei n im Bereich von 1 bis 11 liegt;
C) 5 bis 15 Mol-% wenigstens eines Sulfomonomeren enthaltend eine Alkalimetall-sulfonatgruppe an dem aromatischen Teil einer Dicarbonsäure;
D) die zur Bildung von 100 Mol-% Kondensat notwendige Menge eines aliphatischen oder cycloaliphatischen Glykols mit 2 bis 11 Kohlenstoffatomen; wobei die Prozentangaben jeweils bezogen sind auf die Gesamtmenge der die Komponente II bildenden Monomeren.

Zu den guten mechanischen Eigenschaften zählt unter anderem eine hoher E-Modul ($E_{MD}$ > 3200 N/mm$^2$; $E_{TD}$ > 3500 N/mm$^2$) sowie gute Reißfestigkeitswerte (in MD > 100 N/mm$^2$; in TD > 130 N/mm$^2$).

Zu der guten Verstreckbarkeit zählt, dass sich die Folie bei ihrer Herstellung sowohl in Längs- als auch ich Querrichtung hervorragend und ohne Abrisse orientieren läßt.

Unter Mischungen im Sinne der vorliegenden Erfindung sind mechanische Mischungen zu verstehen, welche aus den Einzelkomponenten hergestellt werden. Im allgemeinen werden hierzu die einzelnen Bestandteile als gepreßte Formkörper kleiner Größe, z. B. linsen- oder kugelförmiges Granulat, zusammengeschüttet und mit einer geeigneten Rüttelvorrichtung mechanisch miteinander gemischt. Eine andere Möglichkeit für die Erstellung der Mischung besteht darin, dass die jeweiligen Komponenten I und II in Granulatform jeweils für sich getrennt dem Extruder für die erfindungsgemäße Deckschicht zugeführt werden und die Mischung im Extruder, bzw. in den nachfolgenden schmelzeführenden Systemen durchgeführt wird.

Ein Blend im Sinne der vorliegenden Erfindung ist ein legierungsartiger Verbund der einzelnen Komponenten I und II, welcher nicht mehr in die ursprünglichen Bestandteilen zerlegt werden kann. Ein Blend weist Eigenschaften wie ein homogener Stoff auf und kann entsprechend durch geeignete Parameter charakterisiert werden.

Zu der wirtschaftlichen Herstellung zählt, dass die Rohstoffe bzw. die Rohstoffkomponenten, die zur Herstellung der schwer entflammbaren Folie benötigt werden, mit handelsüblichen Industrietrocknern, wie Vakuumtrockner, Wirbelschichttrockner, Fließbetttrockner oder Festbetttrockner (Schachttrockner), getrocknet werden können. Wesentlich ist, dass die Rohstoffe nicht verkleben und nicht thermisch abgebaut werden. Die genannten Trockner arbeiten bei Temperaturen zwischen 100 und 170 °C, wo nach der Erwartung des Fachmanns flammhemmend ausgerüsteten Rohstoffe verkleben und die Trockner und/oder Extruder so zusetzen, dass die verkohlte Masse herausgebrochen werden muß, so dass keine Folienherstellung möglich ist. Bei dem am schonendsten trocknenden Vakuumtrockner durchläuft der Rohstoff einen Temperaturbereich von ca. 30°C bis 130 °C bei einem Vakuum von 50 mbar. Danach ist ein sog. Nachtrocknen in einem Hopper bei Temperaturen von 100 -130 °C und einer Verweilzeit von 3 bis 6 Stunden erforderlich. Selbst hier verkleben die nach dem Stand der Technik hergestellten flammhemmend ausgerüsteten Rohstoffe extrem.

Keine Versprödungen bei kurzer Temperaturbelastung bedeutet, dass die Folie nach 100 Stunden Tempervorgang bei 100 °C in einem Umluftofen keine Versprödung - d.h. die Folie bricht beim Knicken nicht- und keine schlechten mechanischen Eigenschaften aufweist. Die mechanischen Eigenschaften bleiben nach dem Tempervorgang unverändert.

Das Flammschutzmittel wird erfindungsgemäß über die sogenannte Masterbatch-Technologie direkt bei der Folienherstellung zudosiert, wobei zweckmäßigerweise die Konzentration des Flammschutzmittels zwischen 0,5 und 30 Gew.-%, vorzugsweise zwischen 1 und 20 Gew.-%, bezogen auf das Gewicht der Schicht des kristallisierbaren Thermoplasten, liegt. Es ist wesentlich, dass das Flammschutzmittel im Polyester löslich ist. Das Flammschutzmittel befindet sich bevorzugt in der Basisschicht. Bei Bedarf können auch die Deckschichten und/oder Zwischenschichten damit ausgerüstet sein.

Die erfindungsgemäße Folie ist zumindest zweischichtig. Sie umfaßt dann als Schichten eine Schicht B (=Basisschicht) und die erfindungsgemäße Deckschicht A. In einer bevorzugten Ausführungsform der Erfindung ist die Folie dreischichtig aufgebaut und weist auf der einen Seite der Schicht B die Deckschicht A und auf der anderen Seite der Schicht B eine weitere Schicht C auf. In diesem Fall bilden die beiden Schichten A und C die Deckschichten A und C. Erfindungsgemäß kann der UV-Absorber in der/den Deckschicht (en) und/oder der Basisschicht enthalten sein.

Die Basisschicht B der Folie besteht bevorzugt zu mindestens 70 Gew.-% aus einem thermoplastischen Polyester. Dafür geeignet sind Polyester aus Ethylenglykol und Terephthalsäure (= Polyethylenterephthalat, PET), aus Ethylenglykol und Naphthalin-2,6-dicarbonsäure (= Polyethylen-2,6-naphthalat, PEN), aus 1,4-Bis-hydroximethylcyclohexan und Terephthalsäure (= Poly-1,4-cyclohexandimethylenterephthalat, PCDT) sowie aus Ethylenglykol, Naphthalin-2,6-dicarbonsäure und Biphenyl-4,4'dicarbonsäure (= Polyethylen-2,6-naphthalatbibenzoat, PENBB). Besonders bevorzugt sind Polyester, die zu mindestens 90 mol-%, bevorzugt mindestens 95 mol-%, aus Ethylenglykol- und Terephthalsäure-Einheiten oder aus Ethylenglykol- und Naphthalin-2,6-dicarbonsäure-Einheiten bestehen. Die restlichen Monomereinheiten stammen aus anderen aliphatischen, cycloaliphatischen oder aromatischen Diolen bzw. Dicarbonsäuren. Geeignete andere aliphatische Diole sind beispielsweise Diethylenglykol, Triethylenglykol, aliphatische Glykole der allgemeinen Formel $HO-(CH_2)_n-OH$, wobei n eine ganze Zahl von 3 bis 6 darstellt (insbesondere Propan-1,3-diol, Butan-1,4-diol, Pentan-1,5-diol und Hexan-1,6-diol) oder verzweigte aliphatische Glykole mit bis zu 6 Kohlenstoff-Atomen. Von den cycloaliphatischen Diolen sind Cyclohexandiole (insbesondere Cyclohexan-1,4-diol) zu nennen. Geeignete andere aromatische Diole entsprechen beispielsweise der Formel $HO-C_6H_4-X-C_6H_4-OH$, wobei X für $-CH_2-$, - $C(CH_3)_2-$, $-C(CF_3)_2-$, -O-, -S- oder $-SO_2-$ steht. Daneben sind auch Bisphenole der Formel $HO-C_6H_4-C_6H_4-OH$ gut geeignet.

Andere aromatische Dicarbonsäuren sind bevorzugt Benzoldicarbonsäuren, Naphthalindicarbonsäuren (beispielsweise Naphthalin-1,4- oder -1,6-dicarbonsäure), Biphenyl-x,x'-dicarbonsäuren (insbesondere Biphenyl-4,4'-dicarbonsäure), Diphenylacetylen-x,x'-dicarbonsäuren (insbesondere Diphenylacetylen-4,4'-dicarbonsäure) oder Stilben-x,x'-dicarbonsäuren. Von den cycloaliphatischen Dicarbonsäuren sind Cyclohexandicarbonsäuren (insbesondere Cyclohexan-1,4-dicarbonsäure) zu nennen. Von den aliphatischen Dicarbonsäuren sind die ($C_3$-$C_{19}$) Alkandisäuren besonders geeignet, wobei der Alkanteil geradkettig oder verzweigt sein kann.

Die Herstellung der Polyester kann z.B. nach dem Umesterungsverfahren erfolgen. Dabei geht man von Dicarbonsäureestem und Diolen aus, die mit den üblichen Umesterungskatalysatoren, wie Zink-, Calcium-, Lithium-, Magnesium- und Mangan-Salzen, umgesetzt werden. Die Zwischenprodukte werden dann in Gegenwart allgemein üblicher Polykondensationskatalysatoren, wie Antimontrioxid oder Titan-Salzen, polykondensiert. Die Herstellung kann ebenso gut nach dem Direktveresterungsverfahren in Gegenwart von Polykondensationskatalysatoren erfolgen. Dabei geht man direkt von den Dicarbonsäuren und den Diolen aus.

Mindestens eine Deckschicht der erfindungsgemäßen Mehrschichtfolie enthält eine im folgenden näher beschriebene Mischung bzw. ein Blend aus zwei Komponenten I und II und gegebenenfalls zugesetzte Additive.

Die Komponente I der Deckschichtmischung bzw. des Blends enthält im wesentlichen einen thermoplastischen Polyester, insbesondere einen solchen Polyester wie erfür die Basisschicht oben näher beschrieben wurde. Für die Erzeugung hoher Mattgrade hat es sich dabei als günstig erwiesen, wenn das Polyesterpolymere für die Komponente I der erfindungsgemäßen Deckschicht eine an sich vergleichsweise geringe Viskosität aufweist. Für die Beschreibung der Viskositäten der Schmelzen wird eine modifizierte Lösungsmittelviskosität (SV-Wert) verwendet. Für handelsübliche Polyethylenterephthalate, die sich zur Herstellung von biaxial orientierten Folien eignen, liegen die SV-Werte im Bereich von 500 bis 1200. Um eine hohe Mattheit der Folie im Sinne der vorliegenden Erfindung zu bekommen, hat es sich als günstig erwiesen, wenn der SV-Wert der Polymeren für die Komponente I der erfindungsgemäßen Deckschicht im Bereich von 500 bis 800, bevorzugt im Bereich von 500 bis 750, insbesondere bevorzugt im Bereich von 500 bis 700 liegen.

Die Komponente II der Deckschichtmischung wird wie bereits angegeben durch Kondensation der folgenden Monomeren bzw. deren zur Bildung von Polymeren befähigten Derivaten erhalten:

A) Isophthalsäure;

B) ggf. einer aliphatische Dicarbonsäure der Formel

$$HOOC-(CH_2)_n-COOH$$

wobei

n im Bereich von 1 bis 11 liegt;

C) eines Sulfomonomeren enthaltend eine Alkalimetall-sulfonatgruppe an dem aromatischen Teil einer Dicarbonsäure;

D) die zur Bildung von 100 Mol-% Kondensat notwendige Menge eines aliphatischen oder cycloaliphatischen Glykols mit 2 bis 11 Kohlenstoffatomen; wobei die Prozentangaben jeweils bezogen sind auf die Gesamtmenge der die Komponente II bildenden Monomeren.

Als Komponente B) der Copolyester geeignete Dicarbonsäuren sind z.B. Malon-, Adipin-, Azelain-, Glutar-, Sebacin-, Kork-, Bernstein- und Brassylsäure sowie Mischungen dieser Säuren oder deren zur Bildung von Polyestern

befähigte Derivate. Von den genannten Säuren wird Sebacinsäure bevorzugt.

Beispiele für Sulfomonomere, die eine Metallsulfonatgruppe an dem aromatischen Teil einer aromatischen Dicarbonsäure (Komponente C) enthalten, sind solche Monomere, die der folgenden allgemeinen Formel entsprechen:

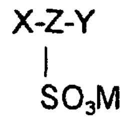

In dieser Formel ist

M ein einwertiges Kation eines Alkalimetalls,
Z ein dreiwertiger aromatischer Rest, und
X und Y sind Carboxylgruppen oder Polyester bildende Äquivalente.

Monomere dieser Art sind in den US-A 3,563,942 und 3,779,993 beschrieben. Beispiele solcher Monomere sind Natrium-suffoterephthalsäure, Natrium-5-sulfoisophthalsäure, Natrium-sulfophthalsäure, 5-(p-Natriumsulfphenoxy)-isophthalsäure, 5-(Natrium-sulfopropoxy)-isophthalsäure und dergleichen Monomere sowie deren zur Bildung von Polyestern befähigte Derivate, wie z.B. die Dimethylester. M ist vorzugsweise $Na^+$, $Li^+$ oder $K^+$.

Unter dem Begriff "zur Bildung von Polyestern befähigte Derivate" sind hier Reaktionsteilnehmer mit solchen Gruppen zu verstehen, die zu Kondensationsreaktionen, insbesondere Umesterungsreaktionen, zur Bildung von Polyesterbindungen befähigt sind. Zu solchen Gruppen zählen Carboxylgruppen sowie deren niedere Alkylester, z.B. Dimethylterephthalat, Diethylterephthalat und zahlreiche andere Ester, Halogenide oder Salze. Bevorzugt werden die Säuremonomeren als Dimethylester verwendet, da auf diese Weise die Kondensationsreaktion besser gesteuert werden kann.

Als Komponente D) geeignete Glykole sind z.B. Ethylenglykol, 1,5-Pentadiol, 1,6-Hexandiol, Neopentylglykol, 1,10-Decandiol, cyclohexan-dimethanol und ähnliche Substanzen. Bevorzugt wird Ethylenglykol verwendet.

Die Copolyester können durch bekannte Polymerisationstechniken hergestellt werden. Im allgemeinen wird so verfahren, dass die Säurekomponenten mit Glykol zusammengebracht und in Anwesenheit eines Veresterungskatalysators erhitzt werden, mit anschließender Zugabe eines Polykondensationskatalysators.

Es hat sich gezeigt, dass die verhältnismäßigen Anteile der Komponenten A, B, C und D, die zur Herstellung der erfindungsmäßigen Mischungen eingesetzt werden, entscheidend für das Erzielen der matten Deckschicht sind. So muß z.B. Isophthalsäure (Komponente A) zu mindestens etwa 65 Mol-% als Säurekomponente anwesend sein. Bevorzugt ist die Komponente A als reine Isophthalsäure, die in einer Menge von etwa 70 bis 95 Mol-% anwesend ist.

Für die Komponente B gilt, dass jede Säure mit der genannten Formel zufriedenstellende Ergebnisse bringt, wobei Adipinsäure, Azelainsäure, Sebacinsäure, Malonsäure, Bemsteinsäure, Glutarsäure und Mischungen dieser Säuren bevorzugt werden. Die angestrebte Menge innerhalb des angegebenen Bereiches beträgt bevorzugt 1 bis 20 Mol-%, bezogen auf die Säurekomponenten der Mischung II, wenn die Komponente B in der Zusammensetzung enthalten ist.

Die Glykolkomponente ist in stöchiometrischer Menge anwesend.

Die für die Zwecke der Erfindung geeigneten Copolyester zeichnen sich weiterhin dadurch aus, dass sie eine Säurezahl unter 10, vorzugsweise von 0 bis 3, ein mittleres Mol-Gewicht unter etwa 50.000 und einen SV-Wert im Bereich von etwa 30 bis 700, vorzugsweise etwa 350 bis 650, aufweisen.

Das Verhältnis (Gewichtsverhältnis) der beiden Komponenten I und II der Deckschichtmischung bzw. des Blends kann innerhalb weiter Grenzen variieren und richtet sich nach dem beabsichtigten Einsatzzweck der Mehrschichtfolie. Bevorzugt liegt das Verhältnis der Komponenten I und II in einem Bereich von I:II=10:90 bis I:II = 95:5, vorzugsweise zwischen I:II = 20:80 bis I:II = 95:5 und insbesondere zwischen I:II =30:70 bis I:II =95:5.

Die Folie gemäß der Erfindung enthält mindestens ein Flammschutzmittel, das über die sogenannte Masterbatch-Technologie direkt bei der Folienherstellung zudosiert wird, wobei die Konzentration des Flammschutzmittels im Bereich von 0,5 bis 30,0 Gew.-%, vorzugsweise von 1,0 bis 20,0 Gew.-%, bezogen auf das Gewicht der Schicht des kristallisierbaren Thermoplasten, liegt. Bei der Herstellung des Masterbatchs wird im allgemeinen ein Verhältnis von Flammschutzmittel zu Thermoplast im Bereich von 60 zu 40 Gew.-% bis 10 zu 90 Gew.-% eingebauten.

Zu den typischen Flammschutzmitteln gehören Bromverbindungen, Chlorparaffine und andere Chlorverbindungen, Antimontrioxid, Aluminiumtrihydrate , wobei die Halogenverbindungen aufgrund der entstehenden halogenhaltigen Nebenprodukte nachteilig sind. Desweiteren ist die geringe Lichtbeständigkeit einer damit ausgerüsteten Folie neben der Entwicklung von Halogenwasserstoffen im Brandfall extrem nachteilig.

Geeignete Flammschutzmitteln, die gemäß der Erfindung eingesetzt werden, sind beispielsweise organische Phosphorverbindungen wie Carboxyphosphinsäuren und deren Anhydride. Erfindungswesentlich ist, dass die organische Phosphorverbindung im Thermoplast löslich ist, da andernfalls die geforderten optischen Eigenschaften nicht erfüllt werden.

Da die Flammschutzmittel im allgemeinen eine gewisse Hydrolyseempfindlichkeit aufweisen, kann der zusätzliche Einsatz eines Hydrolysestabilisators sinnvoll sein.

Als Hydrolysestabilisator werden im allgemeinen phenolische Stabilisatoren, Alkali/Erdalkalistearate undloderAlkali-/Erdalkalicarbonate in Mengen von 0,01 bis 1,0 Gew.-% eingesetzt. Phenolische Stabilisatoren werden in einer Menge von 0,05 bis 0,6 Gew.-%, insbesondere 0,15 bis 0,3 Gew.-% und mit einer Molmasse von mehr als 500 g/mol bevorzugt. Pentaerythrityl Tetrakis-3-(3,5-di-Tertiärbutyl-4-Hydroxyphenyl)-Propionat oder 1,3,5-Trimethyl-2,4,6-tris(3,5-di-Tertärbutyl-4-Hydroxybenzyl)benzol sind besonders vorteilhaft.

Die Basisschicht und/oder die Deckschicht(en) können neben dem über Masterbatch-Technologie zudosierten Flammschutzmittel zusätzlich übliche Additive, wie Stabilisatoren und Antiblockmittel, enthalten. Sie werden zweckmäßig dem Polymer bzw. der Polymermischung bereits vor dem Aufschmelzen zugesetzt. Als Stabilisatoren werden beispielsweise Phosphorverbindungen, wie Phosphorsäure oder Phosphorsäureester, eingesetzt. Typische Antiblockmittel (in diesem Zusammenhang auch als Pigmente bezeichnet) sind anorganische und/oder organische Partikel, beispielsweise Calciumcarbonat, amorphe Kieselsäure, Talk, Magnesiumcarbonat, Bariumcarbonat, Calciumsulfat, Bariumsulfat, Lithiumphosphat, Calciumphosphat, Magnesiumphosphat, Aluminiumoxid, Lithiumfluorid, Calcium-, Barium-, Zink- oder Mangan-Salze der eingesetzten Dicarbonsäuren, Ruß, Titandioxid, Kaolin oder Polymerpartikel wie vernetzte Polystyrol- oder Acrylat-Partikel.

Als Additive können auch Mischungen von zwei und mehr verschiedenen Antiblockmitteln oder Mischungen von Antiblockmitteln gleicher Zusammensetzung, aber unterschiedlicher Partikelgröße gewählt werden. Die Partikel können den einzelnen Schichten in den üblichen Konzentrationen, z.B. als glykolische Dispersion während der Polykondensation oder über Masterbatche bei der Extrusion zugegeben werden. Als besonders geeignet haben sich Pigmentkonzentrationen von 0,0001 bis 10 Gew.-% bezogen auf das Gewicht der Deckschichten erwiesen. Durch die Zugabe von diesen Partikeln in die erfindungsgemäße Deckschicht A hat man eine weitere vorteilhafte Möglichkeit, den Mattgrad der Folie zu variieren. Mit der Zunahme der Pigmentkonzentration ist in der Regel auch eine Zunahme des Mattgrades der Folie verbunden. Eine detaillierte Beschreibung der Antiblockmittel findet sich beispielsweise in der EP-A 0 602 964.

Gegenstand der vorliegenden Erfindung ist auch ein Verfahren zur Herstellung dieser Folie. Es umfaßt das

a) Herstellen einer Folie aus Basis- und Deckschicht(en) durch Koextrusion,
b) biaxiale Verstrecken der Folie und
c) Thermofixieren der verstreckten Folie.

Erfindungswesentlich ist, dass das Masterbatch, welches das Flammschutzmittel und gegebenenfalls den Hydrolysestabilisator enthält, vorkristallisiert bzw. vorgetrocknet wird. Diese Vortrocknung beinhaltet ein gradielles Erhitzen des Masterbatches unter reduziertem Druck ( 20 bis 80 mbar, vorzugsweise 30 bis 60 mbar, insbesondere 40 bis 50 mbar ) und unter Rühren und gegebenenfalls ein Nachtrocknen bei konstanter, erhöhter Temperatur ebenfalls unter reduziertem Druck. Das Masterbatch wird vorzugsweise bei Raumtemperatur aus einem Dosierbehälter in der gewünschten Abmischung zusammen mit den Polymeren der Basis- und/oder Deckschichten und ggf. anderen Rohstoffkomponenten chargenweise in einem Vakuumtrockner, der im Laufe der Trocken- bzw. Verweilzeit ein Temperaturspektrum von 10 °C bis 160°C, vorzugsweise 20°C bis 150°C, insbesondere 30°C bis 130°C durchläuft, gefüllt. Während der ca. 6-stündigen, vorzugsweise 5-stündigen, insbesondere 4-stündigen Verweilzeit wird die Rohstoffmischung mit 10 bis 70 Upm, vorzugsweise 15 bis 65 Upm, insbesondere 20 bis 60 Upm gerührt. Das so vorkristallisierte bzw. vorgetrocknete Rohstoffgemisch wird in einem nachgeschalteten ebenfalls evakuierten Behälter bei 90° bis 180 °C, vorzugsweise 100°C bis 170°C, insbesondere 110°C bis 160°C für 2 bis 8 Stunden, vorzugsweise 3 bis 7 Stunden, insbesondere 4 bis 6 Stunden nachgetrocknet

Zur Herstellung der erfindungsgemäßen Deckschicht werden zweckmäßig Granulate aus der Mischungskomponente I und Granulate aus der Mischungskomponente II im gewünschten Mischungsverhältnis sowie gegebenenfalls das Flammschutz-Masterbatch, welches vorgetrocknet ist, direkt dem Extruder zugeführt. Es hat sich als zweckmäßig erwiesen, für die Extrusion der erfindungsgemäßen matten Deckschicht einen Zweischneckenextruder zu verwenden, wie er z.B. in der EP-A 0 826 478 beschrieben ist. Die Materialien lassen sich bei etwa 300 °C und bei einer Verweilzeit von etwa 5 min aufschmelzen und extrudieren. Unter diesen Bedingungen können im Extruder Umesterungsreaktionen ablaufen, bei denen sich weitere Copolymere aus den Homopolymeren und den Copolymeren bilden können.

Die Polymere für die Basisschicht sowie das Flammschutz-Masterbatch, welches vorgetrocknet ist, werden zweckmäßig über einen weiteren Extruder zugeführt. Etwa vorhandene Fremdkörper oder Verunreinigungen lassen sich aus der Polymerschmelze vor der Extrusion abfiltrieren. Die Schmelzen werden dann in einer Mehrschichtdüse

zu flachen Schmelzefilmen ausgeformt und übereinander geschichtet. Anschließend wird der Mehrschichtfilm mit Hilfe einer Kühlwalze und gegebenenfalls weiteren Walzen abgezogen und verfestigt.

Die biaxiale Verstreckung wird im allgemeinen sequentiell oder simultan durchgeführt. Bei der sequentiellen Streckung wird vorzugsweise erst in Längsrichtung (d.h. in Maschinenrichtung) und anschließend in Querrichtung (d. h. senkrecht zur Maschinenrichtung) verstreckt. Dies führt zu einer Orientierung der Molekülketten. Das Verstrecken in Längsrichtung läßt sich mit Hilfe zweier entsprechend dem angestrebten Streckverhältnis verschieden schnell laufenden Walzen durchführen. Zum Querverstrecken benutzt man allgemein einen entsprechenden Kluppenrahmen. Bei der Simultanstreckung wird die Folie gleichzeitig in Längs- und in Querrichtung in einem Kluppenrahmen gestreckt.

Die Temperatur, bei der die Verstreckung durchgeführt wird, kann in einem relativ großen Bereich variieren und richtet sich nach den gewünschten Eigenschaften der Folie. Im allgemeinen wird die Längsstreckung bei 80 bis 130 °C und die Querstreckung bei 90 bis 150 °C durchgeführt. Das Längsstreckverhältnis liegt allgemein im Bereich von 2,5:1 bis 6:1, bevorzugt von 3:1 bis 5,5:1. Das Querstreckverhältnis liegt allgemein im Bereich von 3,0:1 bis 5,0:1, bevorzugt von 3,5:1 bis 4,5:1. Sofern gewünscht, kann sich an die Querstreckung nochmals eine Längsverstreckung und sogar eine weitere Querverstreckung anschließen.

Bei der nachfolgenden Thermofixierung wird die Folie etwa 0,1 bis 10 s lang bei einer Temperatur von 150 bis 250 °C gehalten. Anschließend wird die Folie in üblicher Weise aufgewickelt.

Die Folie kann weiterhin auf mindestens einer ihrer Oberflächen beschichtet werden, so dass die Beschichtung auf der fertigen Folie eine Dicke von 5 bis 100 nm, bevorzugt 20 bis 70 nm, insbesondere 30 bis 50 nm aufweist. Die Beschichtung wird bevorzugt In-line aufgebracht, d.h. während des Folienherstellprozesses, zweckmäßigerweise vor der Querstreckung. Besonders bevorzugt ist die Aufbringung mittels des "Reverse gravure-roll coating"-Verfahrens, bei dem sich die Beschichtungen äußerst homogen in den genannten Schichtdicken auftragen lassen. Die Beschichtungen werden bevorzugt als Lösungen, Suspensionen oder Dispersionen aufgetragen, besonders bevorzugt als wäßrige Lösung, Suspension oder Dispersion. Die genannten Beschichtungen verleihen der Folienoberfläche eine zusätzliche Funktion; beispielsweise wird die Folie dadurch siegelfähig, bedruckbar, metallisierbar, sterilisierbar, antistatisch oder verbessern z.B. die Aromabarriere oder ermöglichen die Haftung zu Materialien, die ansonsten nicht auf der Folienoberfläche haften würden (z.B. fotografische Emulsionen). Beispiele für Stoffe/Zusammensetzungen, die eine zusätzliche Funktionalität verleihen sind:

Acrylate, wie sie beispielsweise beschrieben sind in der WO 94/13476, Ethylvinylalkohole, PVDC, Wasserglas ($Na_2SiO_4$), hydrophilische Polyester (5-Nasulfoisophthalsäurehaltige PET/IPA Polyester) wie sie beispielsweise beschrieben sind in der EP-A-0 144 878, US-A-4,252,885 oder EP-A-0 296 620, Vinylacetate wie sie beispielsweise beschrieben sind in der WO 94/13481, Polyvinylacetate, Polyurethane, Alkali- oder Erdalkalisalze von $C_{10}$-$C_{18}$-Fettsäuren, Butadiencopolymere mit Acrylnitril oder Methylmethacrylat, Methacrylsäure, Acrylsäure oder deren Ester.

Die genannten Stoffe/Zusammensetzungen werden als verdünnte Lösung, Emulsion oder Dispersion vorzugsweise als wäßrige Lösung, Emulsion oder Dispersion auf eine oder beide Folienoberflächen aufgebracht und anschließend das Lösungsmittel verflüchtigt. Werden die Beschichtungen In-line vor der Querstreckung aufgebracht, reicht gewöhnlich die Temperaturbehandlung in der Querstreckung und anschließenden Hitzefixierung aus, um das Lösungsmittel zu verflüchtigen und die Beschichtung zu trocknen. Die getrockneten Beschichtungen haben dann die zuvor erwähnten gewünschten Schichtdicken.

Desweiteren können die Folien - vorzugsweise in einem Off-Line-Verfahren mit Metallen wie Aluminium oder keramischen Materialien wie $SiO_x$ oder $Al_xO_y$ beschichtet werden. Dies verbessert insbesondere ihre Gasbarriereeigenschaften.

Die erfindungsgemäße Polyesterfolie enthält vorzugsweise noch eine zweite Deckschicht C, die auf der der Deckschicht A entgegengesetzten Seite der Basisschicht B angeordnet ist. Aufbau, Dicke und Zusammensetzung der zweiten Deckschicht können unabhängig von der bereits vorhandenen Deckschicht gewählt werden, wobei die zweite Deckschicht ebenfalls die bereits genannten Polymere, Flammschutzmittel oder Polymermischungen für die Basis- oder die erfindungsgemäße erste Deckschicht enthalten kann, welche aber nicht mit den der ersten Deckschicht identisch sein müssen. Die zweite Deckschicht kann auch andere gängige Deckschichtpolymere enthalten, die auch mit Flammschutzmittel ausgerüstet sein können.

Zwischen der Basisschicht und den Deckschicht(en) kann sich gegebenenfalls noch eine Zwischenschicht befinden. Sie kann aus den für die Basisschicht beschriebenen Polymeren bestehen. In einer besonders bevorzugten Ausführungsform besteht sie aus dem für die Basisschicht verwendeten Polyester. Sie kann auch das beschriebene Flammschutzmittel und die beschriebenen üblichen Additive enthalten. Die Dicke der Zwischenschicht ist im allgemeinen größer als 0,3 µm und liegt vorzugsweise im Bereich von 0,5 bis 15 µm, insbesondere 1,0 bis 10 µm.

Die Dicke der Deckschicht(en) ist im allgemeinen größer als 0,1 µm und liegt vorzugsweise im Bereich von 0,2 bis 5 µm, insbesondere 0,2 bis 4 µm, wobei die Deckschichten gleich oder verschieden dick sein können.

Die Gesamtdicke der erfindungsgemäßen Polyesterfolie kann innerhalb weiter Grenzen variieren und richtet sich nach dem beabsichtigten Verwendungszweck. Sie beträgt vorzugsweise 4 bis 500 µm, insbesondere 5 bis 350 µm, vorzugsweise 6 bis 300 µm, wobei die Basisschicht einen Anteil von vorzugsweise etwa 40 bis 90 % an der

Gesamtdicke hat.

Die erfindungsgemäße Folie ist ohne Umweltbelastung problemlos rezyklierbar, wodurch sie sich beispielsweise für die Verwendung als kurzlebige Werbeschilder, beim Messebau und für andere kurzlebige Werbeartikel, wo Brandschutz gewünscht wird, eignet.

Überraschenderweise erfüllen schon die erfindungsgemäßen Folien ab einer Dicke von 4 μm die Baustoffklassen B2 und B1 nach DIN 4102 Teil 2 und Teil 1 sowie den UL-Test 94. Außerdem zeigen die Folien sogar nach 200 Stunden Tempervorgang bei 100 °C keine Versprödung.

Ein weiterer Vorteil besteht darin, dass die Herstellungskosten der erfindungsgemäßen Folie nur unwesentlich über denen einer Folie aus Standardpolyesterrohstoffen liegen. Die sonstigen verarbeitungs- und gebrauchsrelevanten Eigenschaften der erfindungsgemäßen Folie bleiben im wesentlichen unverändert oder sind sogar verbessert. Daneben ist bei der Herstellung der Folie gewährleistet, dass das Regenerat in einem Anteil von bis zu 50 Gew.-%, bevorzugt 10 bis 50 Gew.-%, jeweils bezogen auf das Gesamtgewicht der Folie, wiederverwendet werden kann, ohne dass dabei die physikalischen Eigenschaften der Folie nennenswert negativ beeinflußt werden, insbesondere ohne den Gelbwert der Folie negativ zu beeinflussen.

Daher war es mehr als überraschend, dass mittels Masterbatch-Technologie, einer geeigneten Vortrocknung und/oder Vorkristallisation und gegebenenfalls Einsatz von geringen Mengen eines Hydrolysestabilisators eine schwerentflammbare und thermoformbare Folie mit dem geforderten Eigenschaftsprofil wirtschaftlich und ohne Verklebung im Trockner herstellbar ist und dass die Folie nach Temperaturbelastung nicht versprödet und beim Knicken nicht bricht.

Sehr überraschend war ebenfalls, dass bei diesem hervorragenden Resultat und dem geforderten Flammschutz

- der Gelbwert der Folie im Vergleich zu einer nicht mit Flammschutzmittel ausgerüsteten Folie im Rahmen der Meßgenauigkeit nicht negativ beeinflußt ist;
- keine Ausgasungen, keine Düsenablagerungen, keine Rahmenausdampfungen auftreten, wodurch die Folie eine exzellente Optik aufweist und ein ausgezeichnetes Profil und eine hervorragende Planlage hat;
- sich die schwerentflammbare Folie durch einen hervorragende Streckbarkeit auszeichnet, so dass sie verfahrenssicher und stabil auf high speed film lines bis zu Geschwindigkeiten von 420m/min produktionssicher hergestellt werden kann.

Damit ist eine solche Folie auch wirtschaftlich rentabel.

Durch die überraschende Kombination ausgezeichneter Eigenschaften eignet sich die erfindungsgemäße Folie hervorragend für eine Vielzahl verschiedener Anwendungen, beispielsweise für Innenraumverkleidungen, für Messebau und Messeartikel, als Displays, für Schilder, für Schutzausrüstung von Maschinen und Fahrzeugen, im Beleuchtungssektor, im Laden- und Regalbau, als Werbeartikel, Kaschiermedium, für Gewächshäuser, Überdachungen, Außenverkleidungen, Abdeckungen, Anwendungen im Bausektor und Lichtwerbeprofile, Schattenmatten, Elektroanwendungen.

Außerdem zeichnet sich die erfindungsgemäße Folie durch einen niedrigen Glanz; insbesondere einen niedrigen Glanz der Folienoberfläche A, und durch eine vergleichsweise niedrige Trübung aus. Außerdem besitzt sie ein gutes Wickel- und Verarbeitungsverhalten. Weiterhin ist erwähnenswert, dass die erfindungsgemäße Deckschicht gut mit Kugelschreiber, Filzstift oder Füllfeder beschriftbar ist.

Der Glanz der Folienoberfläche A ist niedriger als 70. In einer bevorzugten Ausführungsform beträgt der Glanz dieser Seite weniger als 60 und in einer besonders bevorzugten Ausführungsform weniger als 50. Diese Folienoberfläche vermittelt damit einen besonders hohen werbewirksamen Charakter und eignet sich daher insbesondere als außenliegende Oberfläche bei einer Verpackung.

Die Trübung der Folie ist kleiner als 40 %. In einer bevorzugten Ausführungsform beträgt die Trübung der Folie weniger als 35 % und in einer besonders bevorzugten Ausführungsform weniger als 30 %. Durch die vergleichsweise geringe Trübung der Folie (verglichen mit einer matten Monofolie, siehe Vergleichsbeispiel ) kann die Folie z. B. im Konterdruck bedruckt werden oder es können Sichtfenster eingebaut werden, durch die z.B. das Füllgut sehr gut zu erkennen ist.

Weitere Anwendungsgebiete sind die Verwendung zur Herstellung von Etiketten (Labels), als Trennfolie zur Herstellung von GFK-Halbzeugen, als Prägefolie oder In-Mold-Label.

Die nachstehende Tabelle (Tabelle 1) faßt die wichtigsten erfindungsgemäßen Folieneigenschaften noch einmal zusammen.

| | erfindungsgemäßer Bereich | bevorzugt | besonders bevorzugt | Einheit | Meßmethode |
|---|---|---|---|---|---|
| Glanz, Seite A | < 70 | < 60 | < 50 | | DIN 67 530 |
| Trübung | < 40 | < 35 | < 30 | % | ASTM-D 1003-52 |
| Baustoffklasse nach DIN 4102 | erfüllt B 1 und B 2 | | | | DIN 4102 |

Zur Charakterisierung der Rohstoffe und der Folien wurden die folgenden Methoden benutzt:

**Meßmethoden**

DIN = Deutsches Institut für Normung
ISO = International Organization for Standardization
ASTM = American Society for Testing and Materials

**SV (DCE), IV (DVE)**

Die Standardviskosität SV (DCE) wird, angelehnt an DIN 53726, in Dichloressigsäure gemessen. Die intrinsische Viskosität (IV) berechnet sich wie folgt aus der Standardviskosität

$$IV\ (DCE) = 6{,}67 \cdot 10^{-4}\ SV\ (DCE) + 0{,}118$$

**Reibung**

Die Reibung wurde nach DIN 53 375 bestimmt. Die Gleitreibungszahl wurde 14 Tage nach der Produktion gemessen.

**Oberflächenspannung**

Die Oberflächenspannung wurde mit der sogenannten Tintenmethode (DIN 53 364) bestimmt.

**Trübung**

Die Trübung der Folie wurde nach ASTM-D 1003-52 gemessen. Die Trübungsmessung nach Hölz wurde in Anlehnung an ASTM-D 1003-52 bestimmt, wobei jedoch zur Ausnutzung des optimalen Meßbereichs an vier übereinanderliegenden Folienlagen gemessen und anstelle einer 4°-Lochblende eine 1°-Spaltblende eingesetzt wurde.

**Glanz**

Der Glanz wurde nach DIN 67 530 bestimmt. Gemessen wurde der Reflektorwert als optische Kenngröße für die Oberfläche einer Folie. Angelehnt an die Normen ASTM-D 523-78 und ISO 2813 wurde der Einstrahlwinkel mit 20° oder 60° eingestellt. Ein Lichtstrahl trifft unter dem eingestellten Einstrahlwinkel auf die ebene Prüffläche und wird von dieser reflektiert bzw. gestreut. Die auf den photoelektronischen Empfänger auffallenden Lichtstrahlen werden als proportionale elektrische Größe angezeigt. Der Meßwert ist dimensionslos und muß mit dem Einstrahlwinkel angegeben werden.

**Rauhigkeit**

Die Rauhigkeit $R_a$ der Folie wurde nach DIN 4768 bei einem Cut-off von 0,25 mm bestimmt.

**Brandverhalten**

Das Brandverhalten wird nach DIN 4102 Teil 2, Baustoffklasse B2 und nach DIN 4102 Teil 1, Baustoffklasse B1 sowie nach dem UL-Test 94 ermittelt.

Die folgenden Beispiele illustrieren die Erfindung.

**Beispiel 1**

a) Zubereitung der Komponente II für die erfindungsgemäße Deckschichtmischung Ein Copolyester mit 90 Mol-% Isophthalsäure und 10 Mol-% des Natriumsalzes der 5-Sulfoisophthalsäure als Säurekomponente und 100 Mol-% Ethylenglykol als Glykolkomponente wurde nach dem folgenden Verfahren hergestellt:
Ein 2 l fassender Reaktionsbehälter aus Edelstahl, der mit einem Ankerrührer, einem Thermoelement zur Messung der Temperatur des Gefäßinhalts, einer 18 Zoll-Claisen/Vigreux-Destillationskolonne mit Kühler und Vorlage, einer Einlaßöffnung und einem Heizmantel ausgerüstet war, wurde auf 190 °C vorgeheizt, mit Stickstoff gespült und mit 1065,6 g Dimethylisophthalat, 180,6 g Dimethyl-5-sulfoisophthalat-natriumsalz und 756,9 g Ethylenglykol befüllt. Außerdem wurden noch ein Puffer ($Na_2CO_3 \cdot 10H_2O$ - 0,439 g) und ein Umesterungskatalysator ($Mn(OAc)_2 \cdot 4\ H_2O$ - 0,563 g) in ein Gefäß gegeben. Das Gemisch wurde unter Rühren erhitzt, wobei Methanol ab destillierte. Während der Destillation wurde die Gefäßtemperatur allmählich auf 250 °C erhöht. Als das Gewicht des Destillates der theoretischen Methanolausbeute entsprach, wurde eine Ethylenglykollösung mit einem Gehalt von 0,188 g phosphoriger Säure zugesetzt. Die Destillationskolonne wurde durch einen gekrümmten Dampfabzug mit Vorlage ersetzt. Dem Reaktionsgemisch wurden 20 g reines Ethylencarbonat zugegeben, und sofort setzte eine heftige Gasentwicklung ($CO_2$) ein. Die $CO_2$-Entwicklung ließ nach etwa 10 min nach. Es wurde dann ein Unterdruck von 240 mm Hg gezogen und der Polykondensationskatalysator (0,563 g $Sb_2O_3$) in einer Ethylenglykolaufschlämmung) hinzugefügt. Das Reaktionsgemisch wurde unter Beibehaltung des Unterdruckes von 240 mm Hg 10 min gerührt, wonach der Druck in Stufen von jeweils 10 mm Hg/min von 240 mm Hg auf 20 mm Hg weiter reduziert wurde. Sobald das Vakuum im System auf 20 mm Hg reduziert war, wurde die Gefäßtemperatur mit einer Geschwindigkeit von 2 °C/min von 250 °C auf 290 °C angehoben. Bei einer Temperatur von 290 °C im Gefäß wurde die Rührergeschwindigkeit gedrosselt und der Druck auf höchstens 0,1 mm Hg gesenkt. Zu diesem Zeitpunkt wurde ein Amperemeterablesung des Rührermotors vorgenommen. Die Viskosität des Polymeren wurde gesteuert, indem man die Polykondensation nach festen Werten für die Veränderung der Amperezahl des Rührermotors von (jeweils) 2, 3 A ablaufen ließ. Als das gewünschte Molgewicht erreicht war, wurde das Gefäß mit Stickstoff unter Druck gesetzt, um das flüssige Polymere aus dem Bodenstopfen des Gefäßes in ein Abschreckbad aus Eiswasser zu pressen.

B) Mischungsherstellung für die erfindungsgemäße Deckschicht A
Es wurden 75 Gew.-% der Komponente I (Polyethylenterephthalat mit einem SV-Wert von 680, KOSA/Deutschland) mit 25 Gew.-% der Komponente II dem Einfülltrichter eines Zweischneckenextruders zugeführt und beide Komponenten zusammen bei ca. 300 °C extrudiert und dem Deckschichtkanal A einer Mehrschichtdüse zugeführt.

Basisschicht B:

Das Flammschutzmittel wird in Form eines Masterbatches in die Basisschicht dosiert. Das Flammschutz-Masterbatch setzt sich aus 20 Gew.-% Flammschutzmittel und 80 Gew.-% Polyester zusammen. Bei dem Flammschutzmittel handelt es sich um die organische, im Polyester lösliche Phosphorverbindung Amgard P 1045® der Fa. Albright & Wilson.

Die Basisschicht hat folgende Zusammensetzung:

| | |
|---|---|
| 75 Gew.-% | Polyethylenterephthalat (RT 49 von Hoechst AG) mit einem SV-Wert von 800 und |
| 5 Gew.-% | Masterbatch aus 99 Gew.-% Polyethylenterephthalat (RT49) und 1,0 Gew.-% Kieselsäurepartikel (®Sylobloc 44 H der Firma Grace) mit einer mittleren Teilchengröße von 4,5 µm |
| 20 Gew.-% | des Flammschutz-Masterbatches. |

Die Komponenten der Basisschicht werden bei Raumtemperatur aus separaten Dosierbehältern in einem Vakuumtrockner gefüllt, der vor dem Einfüllzeitpunkt bis zum Ende der Verweilzeit ein Temperaturspektrum von 25 °C bis 130 °C durchläuft. Während der 4-stündigen Verweilzeit wird das Rohstoffgemisch mit 61 Upm gerührt.

Das vorkristallisierte bzw. vorgetrocknete Rohstoffgemisch wird in dem nachgeschalteten, ebenfalls unter Vakuum stehenden Hopper bei 140 °C 4 Stunden nachgetrocknet und dem Extruder für die Basisschicht zugeführt.

Deckschichten A und C:

Ebenfalls wurden Chips aus Polyethylenterephthalat und einem Füllstoff dem Extruder für die Deckschicht C zugeführt. Durch Koextrusion und anschließende stufenweise Orientierung in Längs- und Querrichtung wurde dann eine transparente dreischichtige Folie mit ABC-Aufbau und einer Gesamtdicke von 12 µm hergestellt. Die Deckschichten hatten ein Dicke von jeweils 1,5 µm.

Deckschicht A:

| | |
|---|---|
| 80 Gew.-%<br>20 Gew.-% | Komponente I und<br>Komponente II. |

Deckschicht C:

| | |
|---|---|
| 90 Gew.-%<br>10 Gew.-% | Polyethylenterephthalat (RT 49 von Hoechst AG) mit einem SV-Wert von 800 und<br>Masterbatch aus 99 Gew.-% Polyethylenterephthalat (RT49) und 1,0 Gew.-% Kieselsäurepartikel (®Sylobloc 44 H der Firma Grace) mit einer mittleren Teilchengröße von 4,5 µm. |

Die einzelnen Verfahrensschritte waren:

| | | |
|---|---|---|
| Längsstreckung | Temperatur | 85 - 135 °C |
| | Längsstreckverhältnis | 4,0 : 1 |
| Querstreckung | Temperatur | 85 - 135 °C |
| | Querstreckverhältnis | 4,0 : 1 |
| Fixierung | Temperatur | 230 °C |

**Beispiel 2**

Analog zu Beispiel 1 wurde durch Koextrusion eine dreischichtige Folie mit einer Gesamtdicke von 12 µm hergestellt. Es wurde nur die Zusammensetzung der Deckschicht A geändert:

Deckschicht A:

| | |
|---|---|
| 75 Gew.-%<br>25 Gew.-% | Komponente I und<br>Komponente II. |

**Beispiel 3**

Es wurde eine koextrudierte Folie mit der Rezepturgemäß Beispiel 1 hergestellt, bei der die Deckschicht A wie folgt zusammengesetzt war:

| | |
|---|---|
| 70 Gew.-%<br>30 Gew.-% | Komponente I und<br>Komponente II. |

**Beispiel 4**

Es wurde eine koextrudierte Folie mit der Rezeptur gemäß Beispiel 1 hergestellt, bei der die Deckschicht A wie folgt zusammengesetzt war:

| | |
|---|---|
| 60 Gew.-% | Komponente I und |
| 40 Gew.-% | Komponente II. |

**Vergleichsbeispiel**

Es wurde eine Monofolie hergestellt, die wie die Deckschicht A aus Beispiel 3 zusammengesetzt war. Die Folienoberflächen hatten die geforderte Mattheit, die Folie entsprach jedoch nicht den gestellten Anforderungen, weil sie zu trüb war. Außerdem war es sehr schwer, die Folie verfahrenssicher und daher wirtschaftlich herzustellen. Außerdem erfüllt die Folie nicht die Bedingungen der DIN 4102 Teil 2 und Teil 1.

Tabelle

| Beispiel Nr. | Erfüllt nach DIN 4102 Teil 1 und Teil 2 | Foliendicke µm | Deckschichtdicke A/C µm | Folienaufbau | Glanz (60° Meßwinkel) | | Trübung |
|---|---|---|---|---|---|---|---|
| | | | | | A-Seite | C-Seite | |
| 1 | B1 und B2 | 12 | 1,5 / 1,5 | ABC | 65 | 175 | 25 |
| 2 | B1 und B2 | 12 | 1,5 / 1,5 | ABC | 55 | 175 | 26 |
| 3 | B1 und B2 | 12 | 1,5 / 1,5 | ABC | 45 | 175 | 28 |
| 4 | B1 und B2 | 12 | 1,5 / 1,5 | ABC | 35 | 175 | 30 |
| VB | | 12 | | A | 35 | 160 | 70 |

**Patentansprüche**

1. Koextrudierte, biaxial orientierte Polyesterfolie, enthaltend eine im Polyester lösliche organische Phosphorverbindung als Flammschutzmittel wobei die Folie eine matte Deckschicht aufweist, die eine Mischung und/oder ein Blend aus zwei Komponenten I und II enthält, wobei die Komponente I ein Polyethylenterephthalat-Homopolymer oder Polyethylenterephthalat Copolymer oder eine Mischung aus Polyethylenterephthalat Homo- oder Copolymeren ist und die Komponente 11 ein Kondensationsprodukt der folgenden Monomeren und/oder deren zur Bildung von Polymeren befähigten Derivaten ist:

   A) 65 bis 95 Mol-% Isophthalsäure;
   B) 0 bis 30 Mol-% wenigstens einer aliphatische Dicarbonsäure der Formel

   $$HOOC\text{-}(CH_2)_n\text{-}COOH$$

   wobei
   n im Bereich von 1 bis 11 liegt;
   C) 5 bis 15 Mol-% wenigstens eines Sulfomonomeren enthaltend eine Alkalimetall-sulfonatgruppe an dem aromatischen Teil einer Dicarbonsäure;
   D) die zur Bildung von 100 Mol-% Kondensat notwendige Menge eines aliphatischen oder cycloaliphatischen Glykols mit 2 bis 11 Kohlenstoffatomen; wobei die Prozentangaben jeweils bezogen sind auf die Gesamtmenge der die Komponente II bildenden Monomeren.

2. Polyesterfolie nach Anspruch 1, **dadurch gekennzeichnet, dass** das Sulfomonomere ein Monomer der folgenden allgemeinen Formel ist:

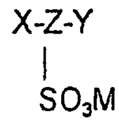

wobei

M ein einwertiges Kation eines Alkalimetalls,
Z ein dreiwertiger aromatischer Rest ist, und
X und Y Carboxylgruppen oder Polyester bildende Äquivalente sind.

3. Polyesterfolie nach Anspruch 1 oder 2, **dadurch gekennzeichnet, dass** das Verhältnis der Komponenten I und II in einem Bereich von I:II =10:90 bis I:II = 95:5 liegt.

4. Polyesterfolie nach einem der Ansprüche 1 bis 3, **dadurch gekennzeichnet, dass** das Flammschutzmittel über die Masterbatch-Technologie direkt bei der Folienherstellung zudosiert wird und wobei das Masterbatch durch gradielles Erhitzen unter reduziertem Druck und unter Rühren erhalten wurde.

5. Polyesterfolie nach Anspruch 4, **dadurch gekennzeichnet, dass** sich direkt an das gradielle Erhitzen unter reduziertem Druck und unter Rühren ein Nachtrocknen bei konstanter, erhöhter Temperatur ebenfalls unter reduziertem Druck anschließt.

6. Polyesterfolie nach einem der Ansprüche 1 bis 5, **dadurch gekennzeichnet, dass** das Flammschutzmittel ausgewählt wird aus einer oder mehreren organischen Phosphorverbindungen.

7. Polyesterfolie nach einem der Ansprüche 1 bis 6, **dadurch gekennzeichnet, dass** die Folie 0.5 bis 30.0 Gew.-% Flammschutzmittel enthält.

8. Polyesterfolie nach einem der Ansprüche 1 bis 7, **dadurch gekennzeichnet, dass** sie zweischichtig ist und aus einer Basisschicht B und einer Deckschicht A besteht.

9. Polyesterfolie nach einem der Ansprüche 1 bis 7, **dadurch gekennzeichnet, dass** sie dreischichtig ist und aus einer Basischsicht B und jeweils einer Deckschicht A bzw. C auf den sich gegenüberliegenden Oberflächen der Basisschicht B besteht.

10. Polyesterfolie nach einem der Ansprüche 1 bis 9, **dadurch gekennzeichnet, dass** der E-Modul in Maschinenrichtung (EMD) > 3200 $N/mm^2$ und der E-Modul in Querrichtung ( ETD) > 3500 $N/mm^2$ist.

11. Polyesterfolie nach einem der Ansprüche 1 bis 10, **dadurch gekennzeichnet, dass** die Reißfestigkeit in Maschinenrichtung (MD) > 100 $N/mm^2$ und die Reißfestigkeit in Querrichtung (TD) > 130 $N/mm^2$ ist.

12. Polyesterfolie nach einem der Ansprüche 1 bis 11, **dadurch gekennzeichnet, dass** der Glanz mindestens einer Folienoberfläche niedriger als 70 ist.

13. Polyesterfolie nach einem der Ansprüche 1 bis 12 **dadurch gekennzeichnet, dass** die Trübung der Folie kleiner als 40 % ist.

14. Verwendung einer Folie nach Anspruch 1 als Innenraumverkleidung, als Display, für Schilder, für Schutzverglasungen, im Beleuchtungssektor, im Laden- und Regalbau, als Werbeartikel, Kaschiermedium, für Gewächshäuser, Überdachungen, Außenverkleidungen, Abdeckungen, im Bausektor, als Lichtwerbeprofil, Schattenmatte oder in Elektroanwendungen.

## Claims

1. A coextruded, biaxially oriented polyester film comprising, as flame retardant, an organophosphorus compound

soluble in the polyester, where the film has a matt outer layer which comprises a mixture and/or a blend made from two components I and II, where component I is a polyethylene terephthalate homopolymer or polyethylene terephthalate copolymer or a mixture made from polyethylene terephthalate homo- or copolymers, and component II is a condensation product of the following monomers and/or of their derivatives capable of forming polymers:

A) from 65 to 95 mol% of isophthalic acid,
B) from 0 to 30 mol% of at least one aliphatic dicarboxylic acid of the formula

$$HOOC\text{-}(CH_2)_n\text{-}COOH$$

where
n is from 1 to 11;
C) from 5 to 15 mol% of at least one sulfomonomer containing an alkali metal sulfonate group on the aromatic moiety of a dicarboxylic acid;
D) an aliphatic or cycloaliphatic glycol having from 2 to 11 carbon atoms, in the amount necessary to form 100 mol% of condensate;

where each of the percentages given is based on the total amount of the monomers forming component II.

**2.** The polyester film as claimed in claim 1, wherein the sulfomonomer is a monomer of the following formula:

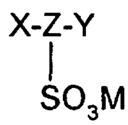

where

M is a monovalent cation of an alkali metal,
Z is a trivalent aromatic radical, and
X and Y are carboxy groups or polyester-forming equivalents.

**3.** The polyester film as claimed in claim 1 or 2, wherein the ratio of components I and II is in the range from I:II = 10:90 to I:II = 95:5.

**4.** The polyester film as claimed in any of claims 1 to 3, wherein the flame retardant is fed directly by way of masterbatch technology during film production, and where the masterbatch was obtained by progressive heating at subatmospheric pressure, with agitation.

**5.** The polyester film as claimed in claim 4, wherein the progressive heating at subatmospheric pressure, with stirring, is directly followed by post-drying at a constant elevated temperature, again at subatmospheric pressure.

**6.** The polyester film as claimed in any of claims 1 to 5, wherein the flame retardant is selected from one or more organic phosphorus compounds.

**7.** The polyester film as claimed in any of claims 1 to 6, which comprises from 0.5 to 30.0% by weight of flame retardant.

**8.** The polyester film as claimed in any of claims 1 to 7, which has two layers and is composed of a base layer B and of an outer layer A.

**9.** The polyester film as claimed in any of claims 1 to 7, which has three layers and is composed of a base layer B and of an outer layer A and, respectively, C on each of the opposite surfaces of the base layer B.

**10.** The polyester film as claimed in any of claims 1 to 9, wherein the machine-direction modulus of elasticity (EMD) is > 3 200 $N/mm^2$ and the transverse modulus of elasticity (ETD) is > 3 500 $N/mm^2$.

**11.** The polyester film as claimed in any of claims 1 to 10, wherein the machine-direction tensile stress at break (MD) is > 100 N/mm$^2$ and the transverse tensile stress at break (TD) is > 130 N/mm$^2$.

**12.** The polyester film as claimed in any of claims 1 to 11, wherein the gloss of at least one film surface is lower than 70.

**13.** The polyester film as claimed in any of claims 1 to 12, wherein the haze of the film is smaller than 40%.

**14.** The use of the film as claimed in claim 1 as interior decoration, as display, for placards, for protective glazing, in the lighting sector, in the fitting out of shops or stores, as a promotional requisite, a laminating medium, for greenhouses, roofing systems, exterior cladding, protective coverings, in the construction sector, as an illuminated advertising profile or a blind, or in electrical applications.

**Revendications**

**1.** Film de polyester coextrudé à orientation biaxiale, contenant comme agent ignifuge un composé organique du phosphore soluble dans le polyester, le film comportant une couche mate de couverture, qui contient un mélange et / ou un assemblage de deux composants I et II, le composant I étant un homopolymère de polytéréphtalate d'éthylène ou un copolymère de polytéréphtalate d'éthylène ou un mélange d'homopolymère et de copolymères de polytéréphtalate d'éthylène et le composant II étant un produit de condensation des monomères suivants et / ou de leurs dérivés aptes à former des polymères :

A) 65 à 95 % en mole d'acide isophtalique ;
B) 0 à 30 % en mole d'au moins un acide dicarboxylique aliptatique de la formule

$$HOOC\text{-}(CH_2)_n\text{-}COOH$$

dans laquelle n est compris dans l'intervalle de 1 à 11.
C) 5 à 15 % en mole d'au moins un sulfomonomère, contenant un groupe sulfonate d'un métal alcalin sur la partie aromatique d'un acide dicarboxylique ;
D) la quantité d'un glycol aliphatique ou cyclo-aliphatique à 2 à 11 atomes de carbone nécessaire pour former 100 % en mole de condensat, les données en pour-cent se rapportant à la quantité totale des monomères constituant le composant II.

**2.** Film de polyester selon la revendication 1, **caractérisé en ce que** le sulfomonomère est un monomère de la formule générale suivante :

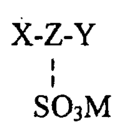

dans laquelle

M est un cation monovalent d'un métal alcalin
Z est un reste aromatique trivalent et
X et Y sont des groupes carboxyles ou des équivalents formant des polyesters.

**3.** Film de polyester selon la revendication 1 ou 2, **caractérisé en ce que** le rapport des composants I et II est compris dans un intervalle de I:II = 10:90 à I:II = 95:5.

**4.** Film de polyester selon l'une quelconque des revendications 1 à 3, **caractérisé en ce que** l'agent ignifuge est dosé directement lors de la fabrication du film par la technologie Masterbatch, et le Masterbatch ayant été obtenu par chauffage en gradient sous pression réduite et sous agitation.

**5.** Film de polyester selon la revendication 4, **caractérisé en ce qu'**un séchage ultérieur à température constante

augmentée, également sous pression réduite, fait suite directement au chauffage en gradient sous pression réduite et sous agitation.

6. Film de polyester selon l'une quelconque des revendications 1 à 5, **caractérisé en ce que** l'agent ignifuge est choisi entre un ou plusieurs composés organiques du phosphore.

7. Film de polyester selon l'une quelconque des revendications 1 à 6, **caractérisé en ce que** le film contient 0,5 à 30 % en poids d'agent ignifuge.

8. Film de polyester selon l'une quelconque des revendications 1 à 7, **caractérisé en ce qu'**il est en deux couches et consiste en une couche de base B et une couche de couverture A.

9. Film de polyester selon l'une quelconque des revendications 1 à 7, **caractérisé en ce qu'**il est en trois couches et consiste en une couche de base B et une couche de couverture A, respectivement C sur chacune des surfaces opposées de la couche de base B.

10. Film de polyester selon l'une quelconque des revendications 1 à 9, **caractérisé en ce que** le module E dans la direction de la machine (EMD) est >3200 $N/mm^2$ et le module E dans la direction transversale (ETD) est >3500 $N/mm^2$.

11. Film de polyester selon l'une quelconque des revendications 1 à 10, **caractérisé en ce que** la résistance à la traction dans la direction de la machine (MD) est >100 $N/mm^2$ et la résistance à la traction dans la direction transversale (TD) est >130 $N/mm^2$.

12. Film de polyester selon l'une quelconque des revendications 1 à 11, **caractérisé en ce que** le brillant d'au moins une surface du film est inférieur à 70.

13. Film de polyester selon l'une quelconque des revendications 1 à 12, **caractérisé en ce que** la turbidité du film est inférieure à 40 %.

14. Utilisation d'un film selon la revendication 1 comme revêtement d'intérieur, comme afficheur, pour des écriteaux, pour des vitrages de protection, dans le secteur de l'éclairage, dans la construction de magasins et d'étagères, comme article publicitaire, matériau de doublage, pour des serres, des préaux, des revêtements extérieurs, des protections dans le secteur du bâtiment, comme profilé publicitaire lumineux, natte pare-soleil ou dans des applications de l'électricité.